# EUROPEAN PATENT SPECIFICATION

(11) **EP 1 828 552 B1**
(45) Date of publication and mention of the grant of the patent: **19.08.2009**
(21) Application number: 05801108.1
(22) Date of filing: 08.11.2005
(51) Int. Cl.: F01L 1/344

(54) **VANE-TYPE PHASER**
FLÜGELZELLEN-NOCKENWELLENVERSTELLER
DEPHASEUR DE TYPE A AUBE

(30) Priority: 23.12.2004 GB 0428063
(43) Date of publication of application: 05.09.2007
(73) Proprietor: Mechadyne PLC, Kirtlington, Oxfordshire OX5 3JQ (GB)
(72) Inventor: METHLEY, Ian, Witney Oxfordshire OX29 8JL (GB); ASPINALL, Jonathan, Alexander, Bicester OX OX26 2GT (GB)
(74) Representative: Messulam, Alec Moses
(86) International application number: PCT/GB2005/050199
(87) International publication number: WO 2006/067519

(56) References cited:
- US-A- 4 091 776
- US-A1- 2001 017 116
- US-B1- 6 336 433
- US-B1- 6 481 401
- US-B1- 6 669 567

## Description

### Field of the invention

The present invention relates to a vane-type phaser in combination with an assembled camshaft for enabling the phase of rotation of engine cams to be varied in relation to the phase of rotation of the engine crankshaft.

### Background of the invention

A phaser, also termed a phase change mechanism, is a device used in engines to vary dynamically the instant, or phase angle, in the engine cycle when the intake and/or exhaust valves of the engine open and close. Such devices are known which are incorporated in the drive pulley of the camshaft and which comprise a drive member connected to the camshaft and a driven member connected to the crankshaft. The drive member normally rotates with and at the same speed as the driven member but when it is desired to change the phase of the camshaft, the two members are rotated relative to one another.

In a vane-type phaser, as described for example in EP 0799976, EP 0807747 and GB 2369175, the rotation of the drive member relative to the driven member is effected hydraulically. A vane movable with one of the two members is received in an arcuate cavity of the other member and divides the cavity into two variable volume working chambers. When a hydraulic pressure medium, usually engine oil, is prevented from entering into or being discharged from the working chambers, the drive and driven members rotate as one. On the other hand, when pressure medium is pumped into one chamber and discharged from the other, the members are rotated relative to one another to change the phase of the camshaft relative to the crankshaft.

### Summary of the invention

According to the present invention, there is provided a camshaft assembly comprising a tubular first shaft which concentrically surrounds and is rotatable relative to a second shaft, relative rotation of the two shafts causing selected cams of the camshaft to rotate relative to other cams of the camshaft, in combination with a phaser comprising a drive member and a driven member, each of the drive and driven members being connected for rotation with a respective on of the two shafts of the camshaft assembly, wherein a first of the members comprises a disc with at least one arcuate cavity that is open at both axial ends, and the second member comprises two closure plates sealing off the axial ends of each cavity of the first member, the phaser further comprising at least one vane formed separately from the closure plates which is movably received in a respective cavity to divide the cavity into two variable volume working chambers, each axial end of the vane being secured to a respective one of the two closure plates.

The combination of the invention is advantageous in that it eliminates any variation in the clearance between the vane and the cavity as a result of relative axial movement of the two members. Furthermore, the phaser simplifies assembly and reduces the number of components that need to be manufactured with close tolerances. In this respect, it is only necessary to ensure that the axial length of the vanes matches the thickness of the disc in which the cavity is formed. As the vanes are secured at their opposite ends to the two closure plates, leakage at the axial ends of the vanes is entirely avoided and seals fitted to the radially inner and outer sides of the vanes can readily ensure an adequate seal between the vanes and the cavity walls. The large area of overlap between the closure plates and the axial end surfaces of the disc also minimises any leakage from between the two members.

In a preferred embodiment of the invention, the first member may be formed with a central bore having formations for coupling the first member for rotation with the tubular outer shaft of the assembled camshaft. In this case, it is possible to form one of the closure plates with a central bore of a diameter at least equal to that of central bore of the first member and the other closure plate with a central bore of smaller diameter than the bore of the first member. This enables the second closure plate to be secured by means of an axially extending fastener to the axial end of the inner shaft of the camshaft, the latter shaft passing through the central bores of the first closure plate and the first member.

Alternatively, the first closure plate may have formations for coupling the second member for rotation with the tubular shaft. In this case, the first member can be formed with a bore smaller than that of the first closure plate. This enables the first member to be secured by means of an axially extending fastener to the axial end of the second shaft passing through the central bore of the first closure plate. The head of the fastener could be accessed through a clearance bore in the second closure plate.

In a hydraulically operated phaser, the phase of the camshaft cannot be controlled by the phaser until the available hydraulic pressure, for example from the engine lubricant pump, is sufficient to overcome the reaction forces acting on the valve train. It is therefore further desirable for the phaser to comprise a locking pin disposed within the first member and spring biased to engage in a hole in the second member to lock the two members in a predetermined position relative to one another, the pin being retractable by the hydraulic pressure prevailing in the working chambers whereby the locking pin is automatically retracted to permit relative angular movement of the two members when the hydraulic pressure in the working chamber is sufficient to rotate the members relative to one another.

### Brief description of the drawings

The invention will now be described further, by way of example, with reference to the accompanying drawings, in which:

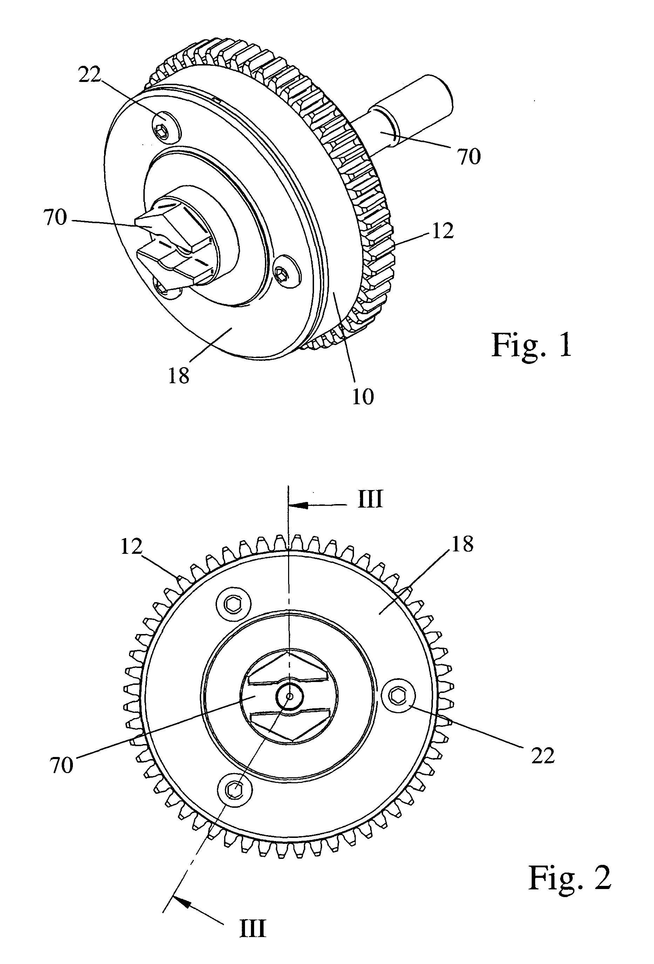

Figure 1 is a perspective view of an assembled phaser of the invention,
Figure 2 is a front view of the phaser in Figure 1,
Figure 3 is a section along the line III-III in Figure 2,
Figure 4 is a section along the line IV-IV in Figure 3, and
Figure 5 is an exploded perspective view of the phaser of Figures 1 to 4.

### Detailed description of the preferred embodiment

The phaser in the drawings comprises a driven member 10 which is in the form of a thick disc with gear teeth 12. The gear teeth 12 mesh with a gear or a toothed belt (not shown) driven by the engine crankshaft to rotate the camshaft at half the engine speed (in the case of a four-stroke engine). The phaser is intended to replace the drive pulley that would normally be mounted on the front end of a camshaft.

The disc 10 has three arcuate through cavities 14 each of which receives a respective radial vane 16. The vanes 16 are secured to two closure plates 18 and 20 which cover the axial ends of the cavities 14 to form within each cavity two closed hydraulic working chambers separated from one another by a movable wall constituted by the vane 16. The vanes 16 are axially clamped between the closure plates 18 and 20 by means of bolts 22 and nuts 24. To prevent the vanes from rotating about the axis of the bolt 22, an alignment pin 26 projects from the end of each vane 16 into a hole 28 in the end plate 20.

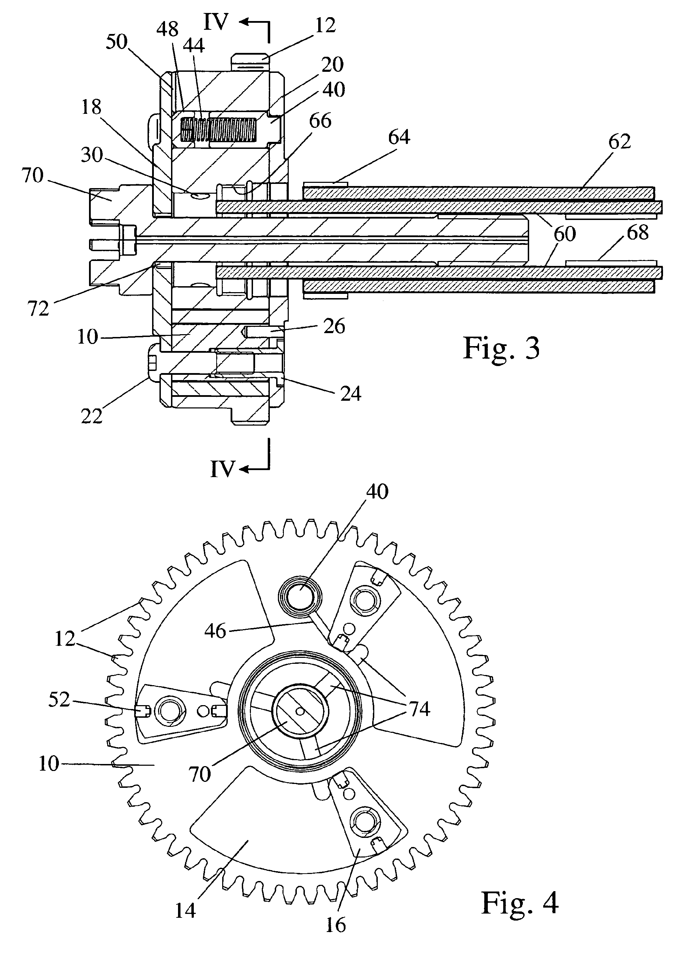

The axial length of the vanes 16 is machined to within a close tolerance to match the axial thickness of the disc 10. As a result, the flat faces of the closure plates 18 and 20 seal off the cavities 14 from one another while still allowing the vanes 16 to rotate within the cavities 14. The closure plates 18 and 20 constitute the drive member that is coupled to rotate the camshaft in a manner to be described in greater detail below. The two radial tips of each vane 16 receive seals 52, as shown in Figure 4, so that oil cannot flow between the working chambers past the vanes 16. Therefore, by supplying engine oil to the working chambers on the opposite sides of the vanes 16, the drive and driven members can be rotated relative to one another to vary the phase of the camshaft relative to the crankshaft.

A locking pin 40, which is received in an axially extending bore 42 in the disc 10, projects, as shown in Figure 3, into a blind bore in the closure plate 20 under the action of a spring 44. The pin 40 serves to lock the drive and driven members for rotation with one another when the oil pressure is too low to overcome the resistance of the valve train. When the oil pressure rises, oil supplied to the right hand side of the locking pin 40, as viewed in Figure 3, retracts the pin 40 into the bore 42. The oil is supplied through a radial passage 46 (see Figure 4) in the disc 10 connecting the bore 42 to one of the cavities. Air behind the pin 42 is expelled past an end cap 48. For this purpose, the end cap 48 has a flat and the space behind it has a radial vent passage 50.

The illustrated phaser is fitted to a two-part camshaft shown schematically in Figure 3 as comprising an inner shaft 60 and a tubular outer shaft 62. The outer shaft 62 has a threaded end 64 engageable with an internal screw thread 66 formed in the disc 10. The inner shaft 60 on the other hand has an internal thread 68 that is engaged by the thread of a bolt 70 that passes through an axial bore 72 in the closure plate 18 and acts the clamp the closure plate 18 against the axial end of the shaft 60. In this way the shaft 62 rotates with the driven member 10 and the shaft 60 rotates with the drive member that includes the closure plates 18 and 20. Each of the shafts 60 and 62 is fast in rotation with a different group of cams so that the phaser will act to alter the phase of some cams relative to the crankshaft while other cams are always rotated in the same phase relative to the crankshaft.

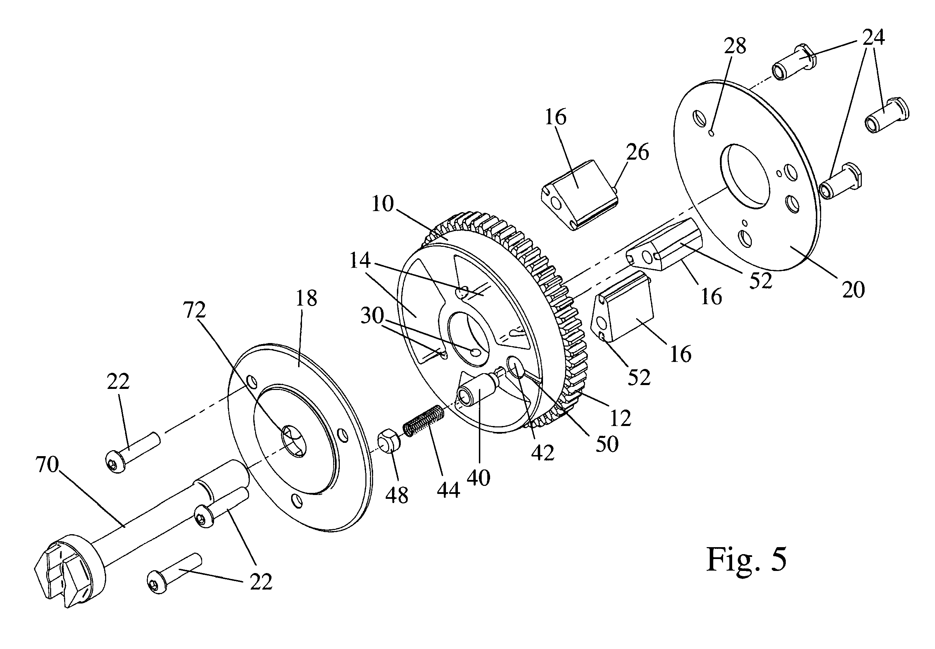

To effect a phase change, oil is supplied to the different working chambers through passages in the camshaft (not shown). One passage in the camshaft communicates with angled bores 30 in the disc 10, shown in Figures 3 and 5, that lead to the working chambers on one side of the vanes 16. The working chambers on the opposite sides of the vanes 16 communicate through radial grooves 74 formed in the closure plate 18 with a small cavity defined by the annulus of the axial bore 72 that surrounds the bolt 70.

An important advantage presented by the illustrated phaser is that the disc 10 is firmly located between the two closure plates 18 and 20 and cannot move axially relative to them. The clearance between the drive and driven members is therefore fixed and does not vary with the axial loading on the phaser. Furthermore, only few surfaces need to be manufactured to exacting standards, thereby offering a considerable cost saving. The fact that the design of the phaser offers convenient locations to establish a coupling between the camshaft and both the drive and the driven members of the phaser makes it particularly suitable for two-part camshafts, as described.

## Claims

1. A valve drive comprising a camshaft assembly having a tubular first shaft(62) which concentrically surrounds and is rotatable relative to a second shaft (60), relative rotation of the two shafts (60,62) causing selected cams of the camshaft to rotate relative to other cams of the camshaft, and a phaser having a drive member and a driven member, each of the drive and driven members being connected for rotation with a respective on of the two shafts (60,62) of the camshaft assembly, wherein a first of the members comprises a disc (10) with at least one arcuate cavity (14) that is open at both axial ends, and the second member comprises two closure plates (18,20) sealing off the axial ends of each cavity (14) of the first member (10), the phaser further having at least one vane (16) formed separately from the closure plates (18,20) which is movably received in a respective cavity (14) to divide the cavity into two variable volume working chambers, each axial end of the vane (16) being secured to a respective one of the two closure plates (18,20).

2. A valve drive as claimed in claim 1, wherein the first member is formed with a central bore having formations for coupling the first member for rotation with a shaft.

3. A valve drive as claimed in claim 2, wherein one of the closure plates is formed with a central bore of a diameter at least equal to that of central bore of the first member and the other closure plate is formed with a central bore of smaller diameter than the bore of the first member so as to enable the second closure plate to be secured by means of an axially extending fastener to the axial end of a shaft passing through the central bores of the first closure plate and the first member.

4. A valve drive as claimed in claim 1, wherein one of the closure plates is formed with a central bore having formations for coupling the second member for rotation with a shaft.

5. A valve drive as claimed in claim 3, wherein the first member is formed with a central bore of smaller diameter than the bore of at least one of the closure plates so as to enable the first member to be secured by means of an axially extending fastener to the axial end of a shaft passing through the central bores of the first closure plate.

6. A valve drive as claimed in any preceding claim, further comprising a locking pin (40) disposed within the first member and spring biased to engage in a hole in the second member to lock the two members in a predetermined position relative to one another, the pin being retractable by the hydraulic pressure prevailing in the working chambers whereby the locking pin is automatically retracted to permit relative angular movement of the two members when the hydraulic pressure in the working chamber is sufficient to rotate the members relative to one another.

7. A valve drive as claimed in any preceding claim, wherein the hollow second shaft of the camshaft is coupled for rotation with the first member of the phaser and the first shaft is coupled for rotation with the second member.

8. A valve drive as claimed in any of claims 1 to 6, wherein the hollow second shaft of the camshaft is coupled for rotation with the second member of the phaser and the first shaft is coupled for rotation with the first member.

## Patentansprüche

1. Ein Ventiltrieb, der einen Nockenwellen-Aufbau umfaßt,der einen röhrenförmige erste Welle (62) aufweist, welche eine zweite Welle (60) umgibt und relativ zu ihr drehbar ist, wobei eine relative Drehung der beiden Wellen (60, 62) ausgewählte Nocken der Nockenwelle dazu bringt sich relativ zu anderen Nocken der Nockenwelle zu drehen; und einen Phasenlagen-Einsteller, der ein Antriebsbauteil und ein angetriebenes Bauteil aufweist, wobei jedes der antreibenden und angetriebenen Bauteile zur Drehung mit einer jeweiligen der beiden Wellen (60, 62) des Nockenwellen-Aufbaus verbunden ist; worin ein erstes der Bauteile eine Scheibe (10) mit mindestens einem gekrümmten Hohlraum (14) umfaßt, der an beiden axialen Enden offen ist; und das zweite Bauteil zwei Verschlußplatten (18, 20) umfaßt, welche die axialen Enden jedes Hohlraums (14) des ersten Bauteils (10) verschließen; wobei der Phasenlagen-Einsteller weiterhin mindestens einen getrennt von den Verschlußplatten (18, 20) gebildeten Flügel (16) aufweist, welcher beweglich in einem jeweiligen Hohlraum (14) aufgenommen ist, um den Hohlraum in zwei Arbeiskammern variablen Volumens aufzuteilen, wobei jedes axiale Ende des Flügels (16) an einer jeweiligen der beiden Verschlußplatten (18, 20) gesichert ist.

2. Ein Ventiltrieb wie in Anspruch 1 beansprucht, in dem das erste Bauteil mit einer zentralen Bohrung gebildet ist, die Gebilde aufweist um das erste Bauteil zur Drehung mit einer Welle zu koppeln.

3. Ein Ventiltrieb wie in Anspruch 2 beansprucht, in dem eine dieser Verschlußplatten mit einer zentralen Bohrung eines Durchmessers gleich mindestens dem der zentralen Bohrung des ersten Bauteils gebildet ist, und die andere Verschlußplatte mit einer zentralen Bohrung eines kleineren Durchmessers als der Bohrung des ersten Bauteils gebildet ist, um die zweite Verschlußplatte in die Lage zu versetzen mittels einer sich axial erstreckenden Befestigung an dem axialen Ende einer Welle gesichert zu werden, welche durch die zentralen Bohrungen der ersten Verschlußplatte und des ersten Bauteils hindurchreicht.

4. Ein Ventiltrieb wie in Anspruch 1 beansprucht, in dem eine der Verschlußplatten mit einer zentralen Bohrung gebildet ist, die Gebilde aufweist um das zweite Bauteil zur Drehung mit einer Welle zu koppeln.

5. Ein Ventiltrieb wie in Anspruch 3 beansprucht, in dem eine der Verschlußplatten mit einer zentralen Bohrung eines kleineren Durchmessers gebildet ist als die Bohrung mindestens einer der Verschlußplatten, um so das erste Bauteil in die Lage zu versetzen mittels einer sich axial erstreckenden Befestigung an dem axialen Ende einer Welle befestigt zu werden, welche durch die zentralen Bohrungen der ersten Verschlußplatte hindurchreicht.

6. Ein Ventiltrieb wie in irgendeinem der vorstehenden Ansprüche beansprucht, der weiterhin einen innerhalb des ersten Bauteils angeordneten und federgespannten Verriegelungsstift (40) umfaßt, um in einem Loch in dem zweiten Bauteil anzugreifen, um die beiden Bauteile in einer vorherbestimmten Stellung relativ zueinander zu verriegeln, wobei der Stift durch in den Arbeitskammern herrschenden Hydraulikdruck einziehbar ist; wodurch der Verriegelungsstift automatisch eingezogen wird, um eine relative Winkelbewegung der zwei Bauteile zu erlauben, wenn der Hydraulikdruck in der Arbeitskammer ausreichend ist um die Bauteile relativ zueinander zu verdrehen.

7. Ein Ventiltrieb wie in irgendeinem der vorstehenden Ansprüche beansprucht, in dem die hohle zweite Welle der Nockenwelle zur Drehung mit dem ersten Bauteil des Phasenlagen-Einstellers gekoppelt ist, und die erste Welle zur Drehung mit dem zweiten Bauteil gekoppelt ist.

8. Ein Ventiltrieb wie in irgendeinem der Ansprüche 1 bis 6 beansprucht, in dem die hohle zweite Welle der Nockenwelle zur Drehung mit dem zweiten Bauteil des Phasenlagen-Einstellers gekoppelt ist, und die erste Welle zur Drehung mit dem ersten Bauteil gekoppelt ist.

## Revendications

1. Dispositif de commande de distribution à soupapes comprenant un ensemble d'arbre à cames possédant un premier arbre tubulaire (62), qui est rotatif par rapport à un deuxième arbre (60) et l'entoure concentriquement, la rotation relative des deux arbres (60, 62) causant la rotation de cames sélectionnées de l'arbre à cames par rapport à d'autres cames de l'arbre à cames, et un dispositif de mise en phase possédant un membre d'entraînement et un membre entraîné, chacun des membres d'entraînement et entraîné étant connecté pour rotation avec l'un respectif parmi les deux arbres (60, 62) de l'ensemble d'arbre à cames, dans lequel un premier des membres comprend un disque (10) avec au moins une cavité courbe (14) qui est ouverte au niveau des deux extrémités axiales, et le deuxième membre comprend deux plaques d'obturation (18, 20) obturant les extrémités axiales de chaque cavité courbe (14) du premier membre (10), le dispositif de mise en phase possédant en outre au moins une aube (16) formée séparément des plaques d'obturation (18, 20), qui est accommodée de façon mobile dans une cavité respective (14) pour diviser la cavité en deux cellules de travail à volume variable, chaque extrémité axiale de l'aube (16) étant attachée à l'une respective parmi les deux plaques d'obturation (18, 20).

2. Dispositif de commande de distribution à soupapes selon la revendication 1, dans lequel le premier membre est formé avec un alésage central, qui possède des formations destinées à coupler le premier membre pour rotation avec un arbre.

3. Dispositif de commande de distribution à soupapes selon la revendication 2, dans lequel l'une des plaque d'obturation est formée avec un alésage central, dont le diamètre est au moins égal à celui de l'alésage central du premier membre, et l'autre plaque d'obturation est formée avec un alésage central dont le diamètre est inférieur à celui de l'alésage du premier membre, de sorte à permettre l'attachement de la deuxième plaque d'obturation, au moyen d'un élément d'assemblage en extension axiale, à l'extrémité axiale d'un arbre qui passe à travers les alésages centraux de la première plaque d'obturation et du premier membre.

4. Dispositif de commande de distribution à soupapes selon la revendication 1, dans lequel l'une des plaques d'obturation est formée avec un alésage central, qui possède des formations destinées à coupler le deuxième membre pour rotation avec un arbre.

5. Dispositif de commande de distribution à soupapes selon la revendication 3, dans lequel le premier membre est formé avec un alésage central, dont le diamètre est inférieur à celui de l'alésage de l'une au moins parmi les plaques d'obturation, de sorte à permettre l'attachement du premier membre, au moyen d'un élément d'assemblage en extension axiale, à l'extrémité axiale d'un arbre qui passe à travers les alésages centraux de la première plaque d'obturation.

6. Dispositif de commande de distribution à soupapes selon l'une des revendications précédentes, comprenant en outre une broche de verrouillage (40) disposée à l'intérieur du premier membre et rappelée par ressort pour engager une ouverture dans le deuxième membre, afin de verrouiller les deux membres dans une position prédéterminée l'un par rapport à l'autre, la broche étant rétractable par la pression hydraulique qui prévaut dans les cellules de travail, la broche de verrouillage étant automatiquement rétractée pour permettre un mouvement angulaire relatif des deux membres lorsque la pression hydraulique dans la cellule de travail est suffisante pour faire entrer les membres en rotation l'un par rapport à l'autre.

7. Dispositif de commande de distribution à soupapes selon l'une des revendications précédentes, dans lequel le deuxième arbre creux de l'arbre à cames est couplé pour rotation avec le premier membre du dispositif de mise en phase, et le premier arbre est couplé pour rotation avec le deuxième membre.

8. Dispositif de commande de distribution à soupapes selon l'une des revendications 1 à 6, dans lequel le deuxième arbre creux de l'arbre à cames est couplé pour rotation avec le deuxième membre du dispositif de mise en phase, et le premier arbre est couplé pour rotation avec le premier membre.
